# EUROPEAN PATENT APPLICATION

(11) **EP 4 531 064 A1**
(43) Date of publication of application: **02.04.2025**
(21) Application number: 24202843.9
(22) Date of filing: 26.09.2024
(51) Int. Cl.: H01F 41/02, B22F 1/065, B22F 1/14, B22F 1/142, H01F 1/06, H01F 1/08

(54) **SURFACE TREATED MAGNETIC MATERIAL AND MAGNET**

(30) Priority: 26.09.2023 US 202318474383
(71) Applicant: ABB SCHWEIZ AG, 5400 Baden (CH)
(72) Inventor: PERIGO, Elio Alberto, Wendell, NC 27591 (US); TREMELLING, Darren D., Apex, NC 27502 (US)
(74) Representative: Maiwald GmbH

(57) **Abstract**

A method for treating magnetic material is provided. The method includes providing hard magnetic particles; increasing the magnetic coercivity of the hard magnetic particles by polishing the hard magnetic particles; and forming a permanent magnet, the permanent magnet including the polished hard magnetic particles.

## Description

### FIELD

The present invention is directed to the development of magnetic materials for magnets and magnets of electrical motors.

### BACKGROUND

Permanent magnets are formed from hard magnetic materials, which retain their magnetism after being magnetized and are more difficult to demagnetize than soft magnetic materials. Among typical permanent magnet materials, ferrite and Nd-Fe-B (Neo) dominate the market: between the two, ferrite permanent magnet materials present the lower cost, whereas Neo permanent magnet materials provide better performance. A factor for the implementation of permanent magnets in electrical machines is their demagnetization, quantified (typically) by their intrinsic coercivity H_{CJ}. To compensate temperature effects (e.g., at high temperature) on magnetic performance, one example strategy (e.g., an industrially applicable strategy) is to add dysprosium (Dy) or terbium (Tb) to Neo permanent magnets: Dy₂Fe₁₄B and Tb₂Fe₁₄B phases present a higher magnetocrystalline anisotropy H_{A} than Nd₂Fe₁₄B, resulting in a permanent magnet with a higher H_{CJ} at all temperatures, enabling their potential implementation in demanding conditions. Another strategy to enhance H_{CJ} for some ferrite magnets implements chemical additives. All cases indicated can impact the final cost.

### SUMMARY

In a first aspect of the present disclosure, a method for treating magnetic material is provided. The method includes providing hard magnetic particles; increasing the magnetic coercivity of the hard magnetic particles by polishing the hard magnetic particles; and forming a permanent magnet, the permanent magnet comprising the polished hard magnetic particles.

In a second aspect according to the first aspect, providing the hard magnetic particles further comprises providing manganese bismuth (Mn-Bi) alloy particles in powder form.

In a third aspect according to the first and/or second aspect, polishing the hard magnetic particles further comprises: mechanically polishing the hard magnetic particles using a polishing container; and removing the polished hard magnetic particles from the polishing container and simultaneously exposing the polished hard magnetic particles to a controlled environmental condition.

In a fourth aspect according to any of the first through third aspects, mechanically polishing the hard magnetic particles further comprises mechanically polishing the hard magnetic particles by using a frictional force between at least two hard magnetic particles of the hard magnetic particles.

In a fifth aspect according to any of the first through fourth aspects, mechanically polishing the hard magnetic particles further comprises mechanically polishing the hard magnetic particles by using a frictional force exerted by a surface of the polishing container onto the hard magnetic particles.

In a sixth aspect according to any of the first through fifth aspects, mechanically polishing the hard magnetic particles using a polishing container further comprises providing free polishing structures within the polishing container.

In a seventh aspect according to any of the first through sixth aspects, mechanically polishing the hard magnetic particles using a polishing container further comprises operating a speed of the polishing container based on a particle size and/or hardness of the hard magnetic material.

In an eighth aspect according to any of the first through seventh aspects, mechanically polishing the hard magnetic particles using a polishing container further comprises operating a speed of the polishing container based on a spatial dimension of a portion of the container that the hard magnetic particles interact with.

In a ninth aspect according to any of the first through eighth aspects, forming the permanent magnet further comprises bonding the polished hard magnetic material to a polymer matrix while magnetically orienting the hard magnetic material.

In a tenth aspect according to any of the first through ninth aspects, the method further comprises molding the polished hard magnetic material coupled to a polymer matrix via compression molding, transfer molding, or injection molding.

In an eleventh aspect according to any of the first through tenth aspects, forming the permanent magnet further comprises densifying the polished hard magnetic material by sintering the polished hard magnetic material at a temperature above 200°C.

In a twelfth aspect according to any of the first through eleventh aspects, increasing the magnetic coercivity of the hard magnetic particles by polishing the hard magnetic particles further comprises increasing a magnetic anisotropy of the hard magnetic particles by polishing the hard magnetic particles.

In a thirteenth aspect according to any of the first through twelfth aspects, providing the hard magnetic particles further comprises providing the hard magnetic particles in liquid form, and wherein polishing the hard magnetic particles further comprises atomizing the liquid hard magnetic particles by exposing a stream of the liquid hard magnetic particles to an atomization force.

In a fourteenth aspect of the present disclosure, a permanent magnet is provided. The permanent magnet includes polished hard magnetic particles. A plurality of the polished hard magnetic particles comprise a rounded surface along a perimeter of a cross-section of the polished hard magnetic particles.

In a fifteenth aspect according to the fourteenth aspect, the permanent magnet further comprises a polymer matrix bonded to the polished hard magnetic particles.

In a sixteenth aspect according to the fourteenth and/or the fifteenth aspect, the polished hard magnetic particles comprise Mn-Bi alloy particles.

In a seventeenth aspect according to any of the fourteenth through sixteenth aspects, the polished hard magnetic particles comprise densified polished hard magnetic particles.

In an eighteenth aspect of the present disclosure, an electric motor is provided. The electric motor includes a rotor; a stator; and a permanent magnet comprising polished hard magnetic particles, wherein a plurality of the polished hard magnetic particles comprise a rounded surface along a perimeter of a cross-section of the polished hard magnetic particles.

In a nineteenth aspect according to the eighteenth aspect, the permanent magnet further comprises a polymer matrix bonded to the polished hard magnetic particles.

In a twentieth aspect according to the eighteenth and/or nineteenth aspect, the polished hard magnetic particles comprise Mn-Bi alloy particles.

Further aspects of the present disclosure are provided in the present disclosure, and any of the first through twentieth aspects may be combined with any other features of the present disclosure disclosed herein.

### BRIEF DESCRIPTION OF THE DRAWINGS

Subject matter of the present disclosure will be described in even greater detail below based on the exemplary figures. All features described and/or illustrated herein can be used alone or combined in different combinations. The features and advantages of various embodiments will become apparent by reading the following detailed description with reference to the attached drawings, which illustrate the following:
Fig. 1 shows a comparison of different J x H curves obtained at room temperature of distinct permanent magnets;
Fig. 2 illustrates the influence of temperature on the J x H curves and magnetic properties of Mn-Bi permanent magnets;
Fig. 3A illustrates examples of particle geometry of a soft magnetic material before a smoothing process;
Fig. 3B illustrates examples of particle geometry of a soft magnetic material after the smoothing process;
Fig. 3C depicts examples of particle geometries of hard magnetic materials after the smoothing process;
Fig. 4 illustrates an example process for polishing hard magnetic particles; and

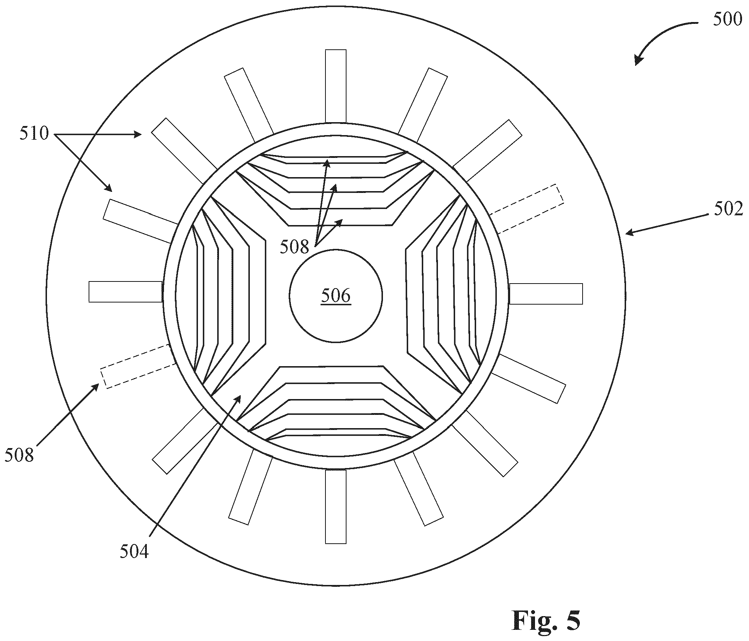

Fig. 5 illustrates an example of a cross section of an electric motor including permanent magnets.

### DETAILED DESCRIPTION

Aspects of the present disclosure provide many advantages. For example, smoothing the magnetic materials can diminish the defects (concentration) of the magnetic particles, supporting an increase of the intrinsic coercivity of magnetic materials (e.g., hard magnetic materials). Moreover, by increasing the intrinsic coercivity of magnetic materials, a more diverse collection of materials can be considered for the creation of magnets (e.g., permanent magnets), reducing a dependency on rare-earth materials and their associated costs. Still further, a number of processes can be employed to achieve smoothed magnetic materials allowing for flexible implementations suited to a variety of contexts and uses.

The inventors of the present disclosure recognized that utilizing materials that are able to achieve higher intrinsic coercivity maintaining an affordable cost and avoiding the use of expensive elements (e.g., rare earths as Nd, Dy, and Tb) is of industrial interest. These conditions can be met utilizing Mn-Bi-based permanent magnets. Aspects of the present disclosure also provide for the improvement of Mn-Bi as a magnetic material (e.g., for permanent magnets). By increasing the intrinsic coercivity of Mn-Bi can provide for demagnetization resistance at colder temperatures, allowing for more diverse applications of Mn-Bi permanent magnets (e.g., motors in cold environments).

Examples of the presented disclosure will now be described more fully hereinafter with reference to the accompanying figures, in which some, but not all, example implementations of aspects of the present disclosure are shown. Indeed, implementations made according to aspects of the present disclosure may be exemplified in different forms and should not be construed as limited to the examples set forth herein; rather, these examples are provided as an aid to fully understanding the present disclosure. Where possible, any terms expressed in the singular form herein are meant to also include the plural form and vice versa, unless explicitly stated otherwise. Also, as used herein, the term "a" and/or "an" shall mean "one or more" even though the phrase "one or more" is also used herein. Furthermore, when it is said herein that something is "based on" something else, it may be based on one or more other things as well. In other words, unless expressly indicated otherwise, as used herein "based on" means "based at least in part on" or "based at least partially on".

A materials resistance to demagnetization, e.g., the materials coercivity, can be quantified by the applied magnetic field required to demagnetize the material (e.g., reduce the magnetic field B to zero). A material can also have different magnetic properties (e.g., different degrees of coercivity) depending on the degree of crystallographic alignment..

A material's magnetic properties can be measured by the relationship between the material's magnetic polarization intensity J and the external magnetic field intensity H. For example, when the material's magnetic polarization intensity J is 0, the corresponding magnetic field intensity is referred to as the intrinsic coercivity H_{CJ}. The strength of the material's intrinsic coercivity H_{CJ} reflects the strength of the magnetic materials resistance to demagnetization. Applying an external magnetic field that exceeds the materials tolerance to a reverse magnetic field H_{K} (e.g., the knee coercive force and/or knee field) may cause a demagnetization (e.g., applying a field where the polarization J is reduced to 90% of the permanent magnets remanence). Therefore, the relationship between H_{K} and H_{CJ} (e.g., squareness) can provide information related to the stability of a permanent magnet under dynamic working conditions.

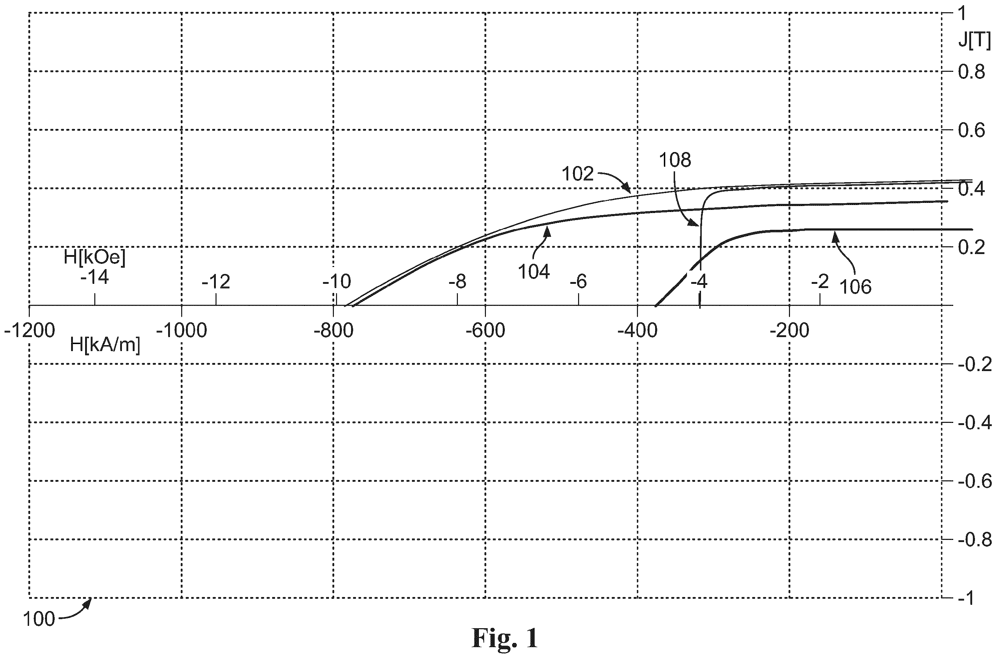

Graph 100 of Fig. 1 provides examples of J x H curves obtained at approximately room temperature for four different and distinct magnetic materials, where each curve indicates the relationship of the respective magnetic materials polarization intensity J to the external magnetic field H, with the intrinsic coercivity H_{CJ} of each material shown at J = 0. The external magnetic field intensity H is shown along the x-axis measured in units of kA/m, and the magnetic polarization intensity J is shown along the y-axis measured in units of Tesla.

In addition to the graph 100, further magnetic properties are provided for the different distinct magnetic materials, such as remanence Bᵣ (a measurement for the remaining magnetic induction or flux density in the magnet after magnetization (e.g., the strength of the resulting permanent magnet)).

Curve 102 depicts the magnetic properties of an example of a bonded Sm-Fe-N magnet (e.g., a magnet including and/or made of polymer bonded Sm-Fe-N magnetic material) at 26 degrees Celsius including an H_{CJ} value of 784 kA/m. Curve 106 depicts the magnetic properties of an example of a bonded ferrite magnet (e.g., a magnet including and/or made of polymer bonded ferrite magnetic material) at 27 degrees Celsius including an H_{CJ} value of 375 kA/m. Curve 108 depicts the magnetic properties of an example of a sintered ferrite magnet (e.g., a magnet including and/or made of sintered ferrite magnetic material) at 20 degrees Celsius including an H_{CJ} value of 318 kA/m.

Curve 104 depicts the magnetic properties of an example of a bonded unpolished Mn-Bi magnet (e.g., a magnet including and/or made of polymer bonded Mn-Bi magnetic material) at 23 degrees Celsius. The magnetic properties of the bonded unpolished Mn-Bi magnet are as follows: a Bᵣ value of .352 T, an H_{CB} value of 266 kA/m, an H_{CJ} value of 773 kA/m, a (BH)ₘₐₓ value of 24 kJ/m³, a J_{K} value of .317 T, an H_{K} value of 386 kA/m, and an H_{D5} value of 599 kA/m.

Mn-Bi permanent magnet material in powder form (e.g., raw material for permanent magnet manufacturing), may present at room temperature remanence a Bᵣ = 0.70 T and H_{CJ} = 1.20 T. Once this powder is sintered (e.g., densified in final shape), however, the intrinsic coercivity may be reduced (e.g., H_{CJ} < 0.50 T). Such a decrease can occur due to defects added during compaction (Wei Tang, et. al, Engineering microstructure to improve coercivity of bulk MnBi magnet, 563 Journal of Magnetism and Magnetic Materials (2022)). On the other hand, when Mn-Bi permanent magnet are produced in bonded form (e.g., a powder mixed with a binder) a remanence Bᵣ can approach that of sintered ferrites (e.g., the sintered ferrites of curve 108), whereas the intrinsic coercivity H_{CJ} may have reached between 0.95 T to 1.20 T, as illustrated in Fig. 1 (e.g., the bonded unpolished Mn-Bi magnet of curve 104). As can be seen by curve 104, Mn-Bi in powder form has good resistance (e.g., H_{CJ}), about three times higher than ferrite.

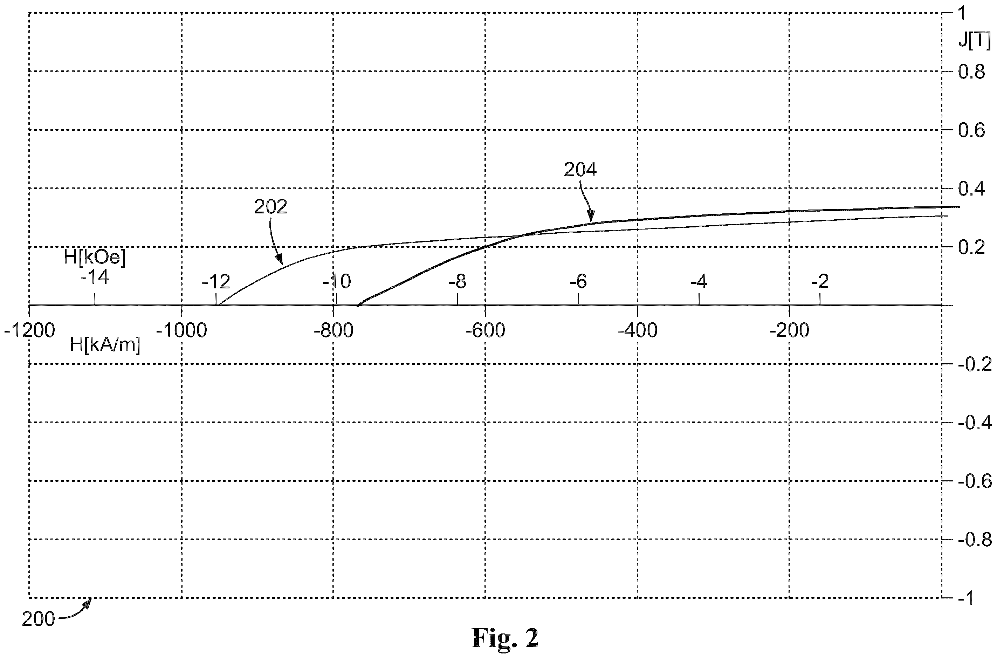

Graph 200 of Fig. 2 provides examples of J x H curves for Mn-Bi bonded permanent magnets obtained at different temperatures, and therefore shows the influence of temperature on the J x H curves, and the magnetic properties and performance of Mn-Bi permanent magnets. As in Fig. 1, the external magnetic field intensity H is shown along the x-axis measured in units of kA/m, and the magnetic polarization intensity J is shown along the y-axis measured in units of Teslas.

Curve 202 depicts the magnetic properties of an example of a bonded (e.g., polymer bonded) Mn-Bi permanent magnet (e.g., a magnet including and/or made of bonded Mn-Bi magnetic material) at 82 degrees Celsius. The magnetic properties of the example bonded Mn-Bi magnet are as follows: a Bᵣ value of .308 T, an H_{CB} value of 225 kA/m, an H_{CJ} value of 955 kA/m, a (BH)ₘₐₓ value of 18 kJ/m³, a J_{K} value of .278 T, an H_{K} value of 268 kA/m, and an H_{D5} value of 804 kA/m.

Curve 204 depicts the magnetic properties of an example of a bonded (e.g., polymer bonded) Mn-Bi permanent magnet (e.g., a magnet including and/or made of bonded Mn-Bi magnetic material) at 26 degrees Celsius. The magnetic properties of the example bonded Mn-Bi magnet are as follows: a Bᵣ value of .335 T, an H_{CB} value of 251 kA/m, an H_{CJ} value of 771 kA/m, a (BH)ₘₐₓ value of 21 kJ/m³, a J_{K} value of .301 T, an H_{K} value of 356 kA/m, and an H_{D5} value of 593 kA/m.

Curves 202 and 204 show that the intrinsic coercivity H_{CJ} actually increases for the example bonded Mn-Bi permanent magnet as the temperature increases, and may perform better than rare earth materials and curves of Fig. 1 (e.g., at least in part due to a positive coercivity coefficient). But, as temperature decreases (e.g., when a Mn-Bi permanent magnet is deployed as part of a traction motor in cold environments), intrinsic coercivity H_{CJ} may be proportionally reduced. Therefore, while some hard magnetic materials such as unpolished Mn-Bi may present advantages at elevated temperatures (e.g., during operation, applications where power density is demanded, or possibly when in warm climates), these materials can face challenges to deployments as traction motors in climates such as Canada or Russia, or possibly even cold storage facilities where the temperature at start can be quite low. In contrast, the intrinsic coercivity H_{CJ} of materials such as Neo-based chemistries may exhibit increased resistance at lower temperatures and reduced resistance at elevated temperatures.

Thus, the inventors of the present invention have recognized that enhanced coercivity for some hard magnetic materials such as Mn-Bi (e.g., at low temperatures) could provide many advantages. For example, bonded Mn-Bi appears well suited for a traction application in a magnet assist approach. For instance, given the limited Bᵣ of Mn-Bi magnetic materials, which may provide appropriate flux weakening capability, Mn-Bi may allow for greater power at higher speed and lower losses when operating at low torque levels at high speed. Mn-Bi magnetic materials may also provide demagnetization resistance and capabilities under periods of high torque at low speeds.

The inventors of the present invention have also recognized that, for hard magnetic material such as Mn-Bi, it may be advantageous to utilize permanent magnets with a strong intrinsic coercivity H_{CJ} because a strong intrinsic coercivity H_{CJ} may reflect the resistance of a permanent magnet to demagnetization. For example, for permanent magnets deployed in an electric motor, demagnetization of the permanent magnets may result in failure of the motor or damage to the motor. Therefore, increasing the intrinsic coercivity H_{CJ} of hard magnetic material may provide many advantages across different deployments, such as improving the stability and reliability across different dynamic conditions (e.g., temperature of deployment, power demand) by making demagnetization more difficult (e.g., increasing the strength required from the applied magnetic field to demagnetize the soft magnetic material). In contrast, for soft magnetic material, it may be advantageous to utilize permanent magnets with a lower intrinsic coercivity H_{CJ} because soft magnetic materials may be required to magnetize and demagnetize in a given implementation. For example, electric motor laminations may include soft magnetic materials that are designed to change polarity as they revolve around a magnetic field of a permanent magnet or electromagnet. Therefore, reducing the intrinsic coercivity H_{CJ} of soft magnetic material may provide many advantages, such as improving the stability and reliability across different dynamic conditions by making magnetization and demagnetization easier (e.g., reducing the strength required from the applied magnetic field to demagnetize the soft magnetic material).

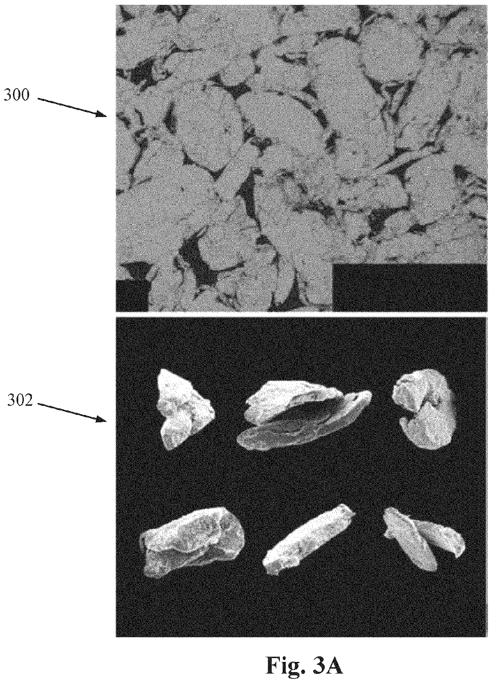

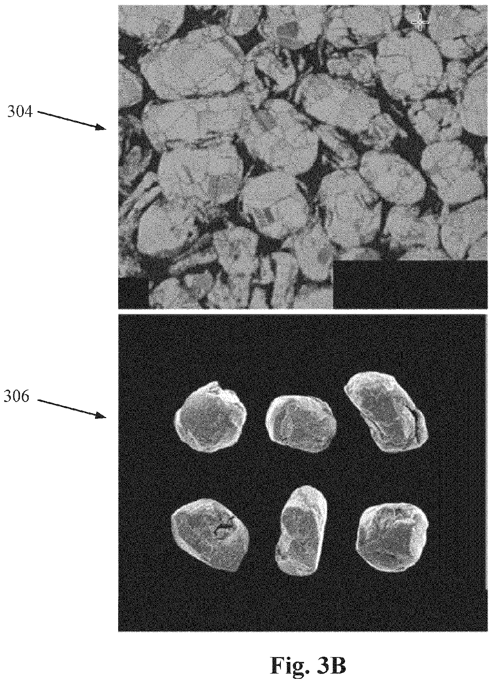

Soft magnetic materials (e.g., in powdered form, respective cores) can be smoothed as shown in Figs. 3A and 3B to improve their respective performance for a given implementation. This can be done, for example, by smoothing (e.g., polishing) the powder particles' surface (e.g., altering the geometry of soft magnetic particles). For instance, as shown in Figs. 3A and 3B, an unpolished Ni-Fe-Mo alloy material as in views 300 and 302 of Fig. 3A can be smoothed (e.g., polished) via mechanical treatment (e.g., ball milling) to produce the Ni-Fe-Mo alloy material grains in views 304 and 306 of Fig. 3B, respectively, where the grains exhibit one or more polished surfaces. While the polishing in irregular, multi-sided geometries as in the particles of views 304, the polishing may also result in smoother, more circular geometries as in view 306. The mechanically polished particles of Fig. 3B exhibited increased magnetic permeability (e.g., an increase of 300%), and reduced losses caused by the intrinsic coercivity H_{CJ} of the alloy material's resistance and other magnetic losses (e.g., by at least 35%). At least part of this increase in the ease of magnetizing and demagnetizing the soft magnetic material (e.g., reduction in magnetic losses) may be attributed to the mechanical polishing that eliminates obstacles and defects that hinder magnetic domain wall displacement and increases the magnetic anisotropy.

For some hard magnetic materials (e.g., Neo, ferrites) the elimination of some defects (e.g., pores, stress relief) may occur during densification (e.g., sintering). However, other hard magnetic materials (e.g., Mn-Bi) may not achieve an appropriate defect-reduction temperature level due to the low sintering (e.g., densification) temperature (e.g., < 300°C for Mn-Bi) of the magnetic materials that is associated with the decomposition temperature of the hard magnetic phase (e.g., with the temperature that results in a reduction of the magnetic properties of Mn-Bi magnetic materials and reduces magnetic resistance). Therefore, the inventors of the present invention have recognized that improvements in hard, powder magnetic material performance (e.g., Mn-Bi permanent magnet material) may provide an approach to enhance (e.g., increase and/or improve) Mn-Bi resistance to demagnetization. For example, eliminating defects (e.g., inclusions, corners) that reduce (local) magnetic anisotropy to support the enhancement of intrinsic coercivity of hard magnetic particles (e.g., Mn-Bi magnetic material) and magnets.

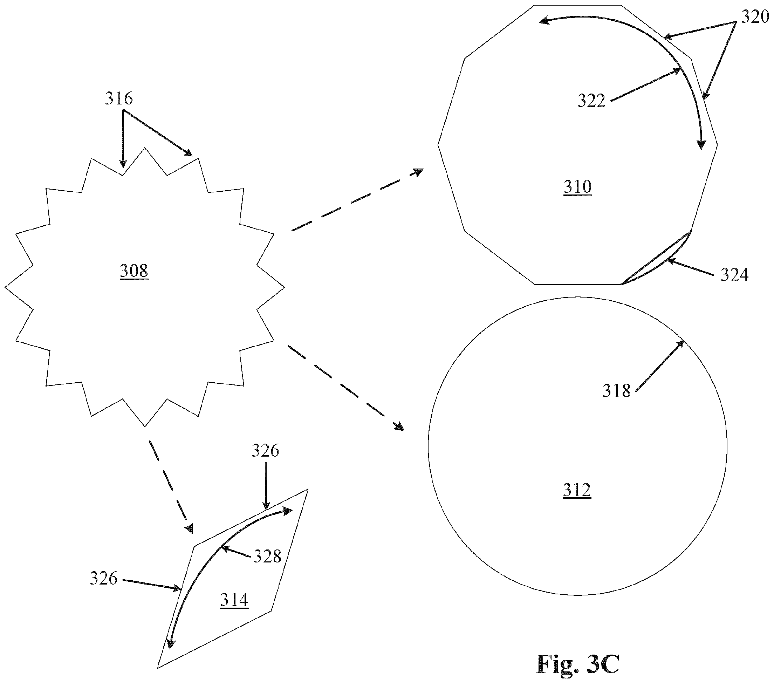

Therefore, while polishing (e.g., smoothing) soft magnetic materials as in Figs. 3A and 3B can make the materials more amenable to magnetization and demagnetization, polishing hard magnetic materials (e.g., as in Fig. 3C) can, in contrast to soft magnetic materials, make Mn-Bi less amenable to magnetization and demagnetization.

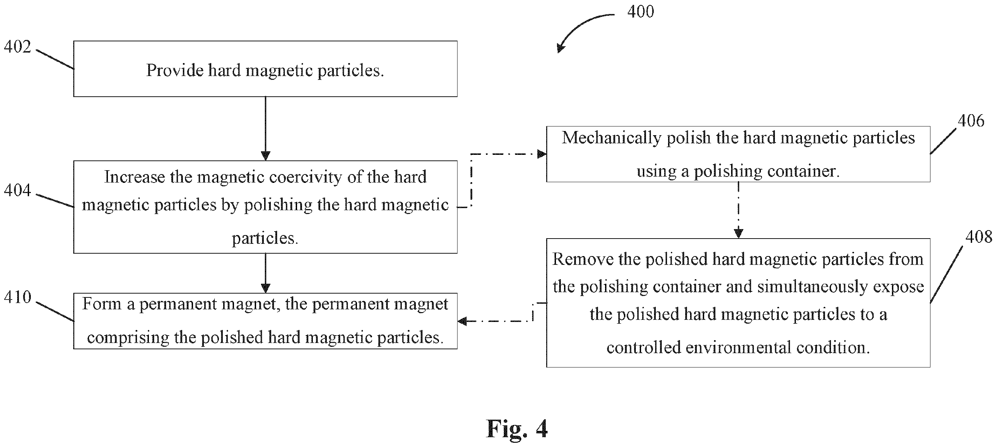

Fig. 4 provides an example process 400 for polishing hard magnetic materials and producing a permanent magnet from the polished hard magnetic materials. For example, process 400 can take a rough, unpolished particle such as the particle 308 of Fig. 3C shown in cross section, and produce a polished particle (e.g., particle 310, 312, or 314 also shown in cross section) exhibiting an improved reduction of local magnetic anisotropy effects. This polished particle 310, 312, or 314 can then be used to produce a permanent magnet (e.g., by sintering or bonding the polished particle 310, 312, or 314). The following steps are examples of how to perform process 400, and may be performed separately (e.g., just steps 402 and 404, or 402 - 406 to produce the polished hard magnetic materials), or together (e.g., steps 402, 404, and 410, or 402 - 410 to form the permanent magnet).

Step 402 includes providing hard magnetic particles. For example, providing the hard magnetic particles and/or (e.g., particle 308) can be provided in a powder form (e.g., alloy powder). The powder form of these particles can be obtained for instance by pulverizing materials produced via casting (e.g., including a heat treatment) and melt spinning of initial elements, with the latter using a wheel to spin the molten liquid form of the hard magnetic material. For instance, the hard magnetic particles (e.g., particle 308) can be a Mn-Bi powder form alloy. The hard magnetic particles may also be provided in liquid form (e.g., molten Mn-Bi), and step 404 can be applied directly to the liquid form of the molten Mn-Bi particles.

The particle 308 can be many geometries, regular or irregular, and can include many rough and irregular surfaces (e.g., surface irregularities 316). These irregular (e.g., abnormal, rough) surfaces can be the result of the creation of the powder form, of the hard magnetic materials inherent crystalline formation process (e.g., while in a non-perfectly liquid form such as molten Mn-Bi), or a previous process that formed the particle 308 (e.g., mechanically grinding or powdering a larger block of Mn-Bi).

Step 404 includes increasing the magnetic coercivity of the hard magnetic particles by polishing the hard magnetic particles. For instance, particle 308 can be smoothed (e.g., polished), and resemble any of particles 310, 312, and/or 314. Polished particle 312 exhibits a perfectly continuous rounded surface 318 (e.g., along a perimeter of cross section of a sphere or cylinder), and is capable of exhibiting greatly improved magnetic coercivity as compared to the unpolished particle 308 (e.g., greatly homogenous domain wall displacement effects for hard magnetic materials). However, due to possible manufacturing limitations a perfectly continuous, rounded surface may not always be possible for the entire particle 312. Polished particle 310, however, exhibits surfaces 320, which together form an at least substantially continuous rounded surface 322. Moreover, while the substantially continuous rounded surface 322 is shown formed from surfaces 320, surface 324 can also constitute (e.g., provide) a continuous rounded surface 322 as a result of polishing the particle 308. Polished particle 314 also exhibits surfaces 326 which resemble flatter surfaces for a more continuous percentage of the size of the particle 314 than surfaces 318 or 310 (e.g., resembles a disk). For example, the polishing of particle 314 can occur predominately over one or two axes motion, whereas the polishing of particles 310 and 312 can have occurred over across three axes. Nevertheless, surfaces 326 provide polished surfaces that together can form an at least substantially continuous rounded surface 328.

As shown by particle 314, the polished surfaces or polished cross sections of the particles need not necessarily be symmetrical; so long as polished surfaces occur, at least some improvement in magnetic coercivity described above can be expected. For example, one way of achieving increased intrinsic coercivity is by increasing magnetic anisotropy of the hard magnetic particles. This can be achieved by polishing hard magnetic particles.

Step 404 can be performed according to a number of polishing processes. For example, the particles (e.g., any of particles 308, 310, 312, and/or 314) can be smoothed against themselves (e.g., by mechanical frictional forces caused by an interaction between surfaces 316 of one particle contacting surfaces 316 of a different particle, or surfaces 320 interacting with other surfaces 316, 320, 324, 326). In other words, mechanically polishing the hard magnetic particles can be done by using a frictional force exerted by a first hard magnetic particle of the hard magnetic particles onto a second hard magnetic particle of the hard magnetic particles. The particles can also be polished with chemical polishing (e.g., polishing materials that cause controlled corrosion forces), alone or in combination with other mechanical polishing processes.

Another form of polishing can be performed using a polishing container. For instance, when step 406 is performed, step 406 includes mechanically polishing the hard magnetic particles using a polishing container. For example, the container can be rotated to polish the hard magnetic particles inside the container. This rotation can occur at a controlled or predetermined speed based on physical parameters of the specific powder (e.g., particle size, hardness, kilograms of total powder in container) and/or parameters of the container (e.g., geometry, circumference, diameter). Therefore, the hard magnetic particles can be mechanically polished by operating a speed of the polishing container based on a physical parameter of the hard magnetic material and/or based on a spatial dimension of a portion of the container that the hard magnetic particles interact with. During the polishing process, the forces (e.g., friction, corrosion) existent between Mn-Bi particles and abrasive surfaces of the container can shape the powders toward a smooth "finishing," enabling the particulate surface to be rounded, thereby helping to avoid demagnetization at lower fields and enhancing its magnetic performance.

The polishing can provide for many different types of polishing. For example, the polishing container may contain an abrasive lining for polishing the hard magnetic materials. In other words that the hard magnetic particles can be mechanically polished by using a frictional force exerted by a surface of the polishing container onto a first hard magnetic particle of the hard magnetic particles. The polishing may also contain free (e.g., unfixed) polishing structures that operate within the container to rotate with the powder and polish the powder (e.g., ball milling). In other words, the hard magnetic particles can be mechanically polished using a polishing container by providing free polishing structures within the polishing container.

Another form of polishing is atomization. For example, when the hard magnetic materials are provided in molten form, the molten material can be exposed to an atomization force to produced polished particles (e.g., particles 310, 312, 314). For instance, an air stream or liquid stream could be applied as an atomization force to the molten hard magnetic material, where droplets are pulled off of the top of the molten material by the air or liquid stream and collected. These collected droplets can then resemble magnetic particles with polished surfaces. In other words, the hard magnetic particles can be polished by atomizing the liquid hard magnetic particles by exposing a stream of the liquid hard magnetic particles to an atomization force.

When step 408 is performed, step 408 includes removing the polished hard magnetic particles from the polishing container and simultaneously exposing the polished hard magnetic particles to a controlled environmental condition. For instance, the polished hard magnetic particles (e.g., particles 310, 312, 314) can be removed from the container in the presence of an inert, controlled atmosphere to prevent possible chemical reactions that could unsmooth (e.g., cause defects on the surface of) the polished particles. For example, the polished particles can be removed from the polishing container without being exposed to an environment with the presence of oxygen and/or moisture.

Step 410 includes forming a permanent magnet, the permanent magnet including the polished hard magnetic particles. For example, the polished hard magnetic particles can be used in combination other processes or materials to form a permanent magnet with the improved magnetic coercivity of the polished hard magnetic materials. Two examples include permanent magnets prepared with sintered or bonded polished hard magnetic materials, and can include magnetically aligning (e.g., orienting) the materials during binding or sintering. For sintered (e.g., densified) hard magnetic materials (e.g., Mn-Bi), the material can be compacted to form a permanent magnet body of a specific geometry and densified under a controlled program of time, temperature, and/or atmosphere. Regarding bonding, the hard magnetic material (e.g., Mn-Bi) can be mixed with and coupled to a binder - for example a polymer matrix of inorganic, organic (e.g., from the family of thermosets and/or thermoplastics), or a mixture of both - and densified via industrially available processes including compression molding, transfer molding, or injection molding. At least one advantage of the polymer binder is that for certain hard magnetic materials that are magnetically sensitive to the ranges of heat and pressure required to perform densification, utilizing a binding process can allow for the materials to avoid exposure to the heat and pressure of the densification process. The formed permanent magnet can then be utilized in a number of different applications, while exhibiting the increased magnetic coercivity and resistance to demagnetization caused by polishing the hard magnetic particles.

Aspects of the present invention can also provide for the development of magnetic materials for permanent magnet motors such as permanent magnet motor 500. For example, the electric motor 500 includes a stator 502, a rotor 504, a shaft 506, permanent magnets 508, and stator windings 510. When the permanent magnets 508 are positioned outside the rotor 504 (e.g., in the stator 502, shown by dashed lines to indicate the use as optional), the motor 500 can be a type of surface permanent magnet motor. When permanent magnets 508 are positioned within the rotor 504, the motor 500 can be a type of internal permanent magnet motor. By implementing permanent magnets 508 in industrial electrical machines (e.g., electric motor 500), permanent magnets can help generate (e.g., contribute to) a constant magnetic density flux in the motor 500.

For instance, the stator 502 and rotor 504 can be magnetically coupled to each other (e.g., in magnetic communication with each other, interact with each other magnetically/electrically). Stator 502 can include stator windings 510, which can carry charge induced by a rotation of the permanent magnets 508 in rotor 504, or can generate a magnetic flux to cause rotation of the rotor 504 by having current applied to the stator windings 510. For example, by selectively applying power to different (e.g., successive) stator windings 510 in a rotating direction, the stator windings 510 can help drive the permanent magnets 508 in the rotor 504 in a synchronous phase, creating a type of permanent magnet assisted synchronous reluctance motor.

Shaft 506 can be affixed to the rotor 504 and transmit rotational force exerted on the rotor 504 as mechanical power to a corresponding component. Alternatively, shaft 506 can also transmit rotational force to the rotor 504 to rotate the rotor 504 and contribute to the generation of electrical power by the stator windings 510 of the electric motor 500.

In some instances, specific motor topologies may depend more or less on the magnetic flux of the permanent magnets for torque creation, and may want to adjust (e.g., increase or decrease) the magnetic flux to the specific implementation of the motor. One case refers to the permanent magnet-assisted synchronous reluctance motors, where torque is partially due to the anisotropy of the soft magnetic lamination implemented in the rotor. In some examples, magnetic materials providing resistance to demagnetization - especially at elevated temperatures - compared or superior to Neo grades without Tb and Dy addition (e.g., polished magnetic materials produced according to one or more embodiments of the present invention), and/or enabling magnetic flux density and cost comparable to sintered ferrites, can help to solve industrial problems (e.g., the techno-economical gap between the two main hard magnetic compounds).

In some examples, a permanent magnet motor can be implemented to provide for and/or assist the movement and/or propulsion of a vehicle (e.g., a traction motor). In some instances, traction motors can experience high temperatures, high temperature variations, and thermal stresses. Because many magnetic materials possess a negative temperature coefficient with respect to their H_{CJ}, increasing the H_{CJ} of permanent magnets and/or permanent magnet materials can provide for more efficient and reliable electric motors.

Permanent magnets produced by polishing the hard magnetic materials (e.g., Mn-Bi materials) may be advantageously utilized in industrial machines and possibly traction motors (the latter is relevant considering the positive temperature coefficient of H_{CJ}). For instance, the permanent magnets do not necessarily use rare-earth elements in their composition, diminishing supply chain constraints on critical materials controlled by a single economic source. The permanent magnets may also provide flexibility in manufacturing, because the hard magnetic materials may be explored in distinct production processes including compression molding, transfer molding, injection molding (which may utilize binders), and sintering (not requiring binders). In some instances, the smoothing process generates rounder particles, facilitating the mixture process of the powder with a chosen binder (which can include thermoset and/or thermoplastic compounds).

While subject matter of the present disclosure has been illustrated and described in detail in the drawings and foregoing description, such illustration and description are to be considered illustrative or exemplary and not restrictive. Any statement made herein characterizing the invention is also to be considered illustrative or exemplary and not restrictive as the invention is defined by the claims. It will be understood that changes and modifications may be made, by those of ordinary skill in the art, within the scope of the following claims, which may include any combination of features from different embodiments described above.

The terms used in the claims should be construed to have the broadest reasonable interpretation consistent with the foregoing description. For example, the use of the article "a" or "the" in introducing an element should not be interpreted as being exclusive of a plurality of elements. Likewise, the recitation of "or" should be interpreted as being inclusive, such that the recitation of "A or B" is not exclusive of "A and B," unless it is clear from the context or the foregoing description that only one of A and B is intended. Further, the recitation of "at least one of A, B and C" should be interpreted as one or more of a group of elements consisting of A, B and C, and should not be interpreted as requiring at least one of each of the listed elements A, B and C, regardless of whether A, B and C are related as categories or otherwise. Moreover, the recitation of "A, B and/or C" or "at least one of A, B or C" should be interpreted as including any singular entity from the listed elements, e.g., A, any subset from the listed elements, e.g., A and B, or the entire list of elements A, B and C.

## Claims

1. A method for treating magnetic material, the method comprising:
providing hard magnetic particles;
increasing the magnetic coercivity of the hard magnetic particles by polishing the hard magnetic particles; and
forming a permanent magnet, the permanent magnet comprising the polished hard magnetic particles.

2. The method of claim 1, wherein providing the hard magnetic particles further comprises providing manganese bismuth (Mn-Bi) alloy particles in powder form.

3. The method of claim 1, wherein polishing the hard magnetic particles further comprises:
mechanically polishing the hard magnetic particles using a polishing container; and
removing the polished hard magnetic particles from the polishing container and simultaneously exposing the polished hard magnetic particles to a controlled environmental condition.

4. The method of claim 3, wherein mechanically polishing the hard magnetic particles further comprises mechanically polishing the hard magnetic particles by using a frictional force between at least two hard magnetic particles of the hard magnetic particles.

5. The method of claim 3, wherein mechanically polishing the hard magnetic particles further comprises mechanically polishing the hard magnetic particles by using a frictional force exerted by a surface of the polishing container onto the hard magnetic particles.

6. The method of claim 3, wherein mechanically polishing the hard magnetic particles using a polishing container further comprises providing free polishing structures within the polishing container.

7. The method of claim 3, wherein mechanically polishing the hard magnetic particles using a polishing container further comprises operating a speed of the polishing container based on a particle size and/or hardness of the hard magnetic material.

8. The method of claim 3, wherein mechanically polishing the hard magnetic particles using a polishing container further comprises operating a speed of the polishing container based on a spatial dimension of a portion of the container that the hard magnetic particles interact with.

9. The method of claim 1, wherein forming the permanent magnet further comprises:
bonding the polished hard magnetic material to a polymer matrix while magnetically orienting the hard magnetic material.

10. The method of claim 9, further comprising molding the polished hard magnetic material coupled to a polymer matrix via compression molding, transfer molding, or injection molding.

11. The method of claim 1, wherein forming the permanent magnet further comprises:
densifying the polished hard magnetic material by sintering the polished hard magnetic material at a temperature above 300°C.

12. The method of claim 1, wherein increasing the magnetic coercivity of the hard magnetic particles by polishing the hard magnetic particles further comprises:
increasing a magnetic anisotropy of the hard magnetic particles by polishing the hard magnetic particles.

13. The method of claim 1, wherein providing the hard magnetic particles further comprises providing the hard magnetic particles in liquid form, and wherein polishing the hard magnetic particles further comprises:
atomizing the liquid hard magnetic particles by exposing a stream of the liquid hard magnetic particles to an atomization force.

14. A permanent magnet, comprising:
polished hard magnetic particles, wherein a plurality of the polished hard magnetic particles comprise a rounded surface along a perimeter of a cross-section of the polished hard magnetic particles.

15. The permanent magnet of claim 14, further comprising:
a polymer matrix bonded to the polished hard magnetic particles.

16. The permanent magnet of claim 14, wherein the polished hard magnetic particles comprise Mn-Bi alloy particles.

17. The permanent magnet of claim 14, wherein the polished hard magnetic particles comprise densified polished hard magnetic particles.

18. An electric motor, the electric motor comprising:
a rotor;
a stator; and
a permanent magnet comprising polished hard magnetic particles, wherein a plurality of the polished hard magnetic particles comprise a rounded surface along a perimeter of a cross-section of the polished hard magnetic particles.

19. The electric motor of claim 18, wherein the permanent magnet further comprises:
a polymer matrix bonded to the polished hard magnetic particles.

20. The electric motor of claim 18, wherein the polished hard magnetic particles comprise Mn-Bi alloy particles.
